(19) **Europäisches Patentamt / European Patent Office / Office européen des brevets**

(11) **EP 2 646 789 B1**

(12) **FASCICULE DE BREVET EUROPEEN**

(45) Date de publication et mention
de la délivrance du brevet:
**15.11.2017 Bulletin 2017/46**

(21) Numéro de dépôt: **11805897.3**

(22) Date de dépôt: **28.11.2011**

(51) Int Cl.:
***G01M 11/02*** *(2006.01)*

(86) Numéro de dépôt international:
**PCT/FR2011/000623**

(87) Numéro de publication internationale:
**WO 2012/072895 (07.06.2012 Gazette 2012/23)**

(54) **PROCÉDÉ DE DÉTERMINATION D'AU MOINS UNE CARACTÉRISTIQUE DE RÉFRACTION D'UNE LENTILLE OPHTALMIQUE**

VERFAHREN ZUR BESTIMMUNG VON MINDESTENS EINER REFRAKTIONSEIGENSCHAFT EINER OPHTHALMISCHEN LINSE

METHOD OF DETERMINING AT LEAST ONE REFRACTION CHARACTERISTIC OF AN OPHTHALMIC LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2010 FR 1004716**

(43) Date de publication de la demande:
**09.10.2013 Bulletin 2013/41**

(73) Titulaire: **Essilor International (Compagnie Générale d'Optique) 94220 Charenton Le Pont (FR)**

(72) Inventeurs:
• **BOUTINON, Stéphane**
  **F-94220 Charenton le Pont (FR)**
• **TANG, David**
  **F-94220 Charenton le Pont (FR)**

(74) Mandataire: **Jacobacci Coralis Harle 32, rue de l'Arcade 75008 Paris (FR)**

(56) Documents cités:
**DE-A1- 19 712 837    DE-A1- 19 744 201
FR-A1- 2 880 118    US-A- 4 348 108
US-A- 4 395 120**

EP 2 646 789 B1

**Description**

DOMAINE TECHNIQUE AUQUEL SE RAPPORTE L'INVENTION

La présente invention concerne un procédé de détermination d'au moins une caractéristique de réfraction d'une lentille ophtalmique.
En particulier, l'invention concerne un tel procédé utilisé pour position un pion de préhension sur une lentille ophtalmique lors d'une étape de centrage-blocage en vue de son détourage et de son montage dans une monture de lunettes.

ARRIERE-PLAN TECHNOLOGIQUE

Lors de la préparation d'une lentille ophtalmique pour son montage dans une monture de lunettes, il est souvent nécessaire de déterminer la puissance de réfraction et la déviation prismatique de la lentille.
Pour cela, on utilise de manière courante une plaque à motifs du type plaque de Hartmann interposée entre la lentille et un dispositif de capture d'image. La lentille est éclairée par des moyens d'éclairement disposés du côté opposé à celui où est disposé le dispositif de capture d'image.
Cette plaque à motifs est transparente et comporte une matrice de points dont la position en l'absence de lentille est prédéterminée. La comparaison de leur position en présence et en l'absence de la lentille permet de déterminer la puissance sphérique de la lentille et sa déviation prismatique.
Cependant, l'utilisation d'une telle plaque à motifs présente des inconvénients. Notamment, l'insertion de cette plaque entre la lentille et le dispositif de capture d'image impose d'augmenter la distance entre la lentille et le dispositif de capture d'image, ce qui entraîne une dégradation de la qualité de l'image et une augmentation des effets de distorsion liés à la puissance de la lentille.
En outre, l'ajout d'une telle plaque à motifs dédiée augmente le coût du dispositif utilisé.
On connait également du document US4348108 un procédé dans lequel la lentille est disposée sur un support comportant des trous.
Dans tous les cas, les points de la plaque à motifs sont alors affichés sur l'image en même temps que la lentille et la mire. Ces points peuvent perturber l'utilisateur et empêcher un réglage précis, notamment lorsque la mesure est effectuée simultanément avec d'autre réglages nécessitant l'identification de repères de centrage ou d'axage de la lentille, car les points de la plaque se superposent avec l'image de ces repères.
Il est également connu d'ajouter des marqueurs sur la lentille pour la détermination d'une caractéristique de réfraction d'une lentille disposée sur un support et imagée d'un côté de ce support sous un éclairage provenant du côté opposé de ce support.
L'ajout de marqueurs à la gouache sur la surface de la lentille peut également gêner la lecture des repères de centrage et/ou d'axage de la lentille. La qualité de l'image est alors dégradée. En outre, cet ajout est long et fastidieux pour l'utilisateur.
Les mesures de la puissance de réfraction et de la déviation prismatique de la lentille sont particulièrement avantageuses dans le cadre du glantage de la lentille ophtalmique, comme expliqué plus en détails ci-après.
Pour effectuer le montage d'une lentille ophtalmique dans une monture de lunette, plusieurs étapes sont réalisées :

- la forme du cercle de la monture est déterminée,
- la lentille est centrée et bloquée à l'aide d'un dispositif centreur-bloqueur : un pion de préhension aussi appelé « gland » est fixé sur une face de la lentille pour matérialiser une position et une orientation de référence pour le taillage et permettre l'entraînement en rotation de la lentille lors de son taillage,
- la lentille ophtalmique est taillée à l'aide d'une meuleuse et est montée dans la monture.

Le dispositif centreur-bloqueur est adapté à déterminer un point de la surface de la lentille définissant l'emplacement au niveau duquel sera posé le gland et/ou l'orientation de ce gland en fonction de la position d'un repère de centrage et/ou d'axage de la lentille ophtalmique et des paramètres du client (écart pupillaire, hauteur par rapport au bas de la monture, angle d'astigmatisme...).
Le repère de centrage de la lentille se trouve au centre optique de la lentille dans le cas d'une lentille unifocale, mais il est décalé par rapport à ce centre optique pour les autres types de lentilles : le repère de centrage est une croix de centrage pour les verres progressifs, ou le sommet d'une pastille de puissance différente pour les verres bifocaux.
Les repères d'axage sont par exemple constitués de traits horizontaux.
La plupart des dispositifs centreur-bloqueur déjà connus détectent la position du repère de centrage et/ou d'axage d'une lentille ophtalmique en éclairant la lentille au moyen d'un faisceau lumineux et en recueillant le faisceaux lumineux transmis au travers elle. Sur l'image obtenue, les dispositifs connus repèrent les ombres des repères de centrage et/ou d'axage.

En pratique, dans un tel dispositif connu, le gland est déposé sur la lentille par un bras articulé qui effectue une course invariable. Le gland est donc toujours déposé à la même position dans l'espace, et il est nécessaire d'ajuster la position de la lentille par rapport à cette position dans l'espace pour qu'elle coïncide avec la position souhaitée pour le gland sur la lentille.

L'image capturée de la lentille éclairée par la source lumineuse disposée de l'autre côté de la lentille par rapport à la caméra est affichée sur un écran. L'écran affiche également une mire indiquant une position pour le repère de centrage déterminée de telle sorte que si le repère de centrage de la lentille est aligné avec ladite mire, le gland sera déposé à une position adéquate pour le blocage.

L'utilisateur n'a plus qu'à déplacer la lentille de manière à faire coïncider sur l'écran les positions du repère de centrage de la lentille et de la mire.

Une telle méthode est dite « à visée projetée », car les rayon lumineux traversent la lentille avant d'être détectés par le dispositif de capture d'image.

De tels dispositifs commettent une erreur de détection de la position du centre optique ou des repères de centrage et/ou d'axage de la lentille ophtalmique. Cette erreur résulte des déviations prismatiques de l'ombre des repères, induites par la lentille elle-même, qui dépendent des puissances optiques sphérique, cylindrique et prismatique de la lentille ophtalmique dans la zone du repère considéré.

En effet, tous les rayons lumineux traversant la lentille, sauf ceux passant par le centre optique d'une lentille unifocale sont déviés. Ainsi, l'image de la lentille ophtalmique affichée sur l'écran et visualisée par l'utilisateur est déformée par rapport à la réalité, ce qui entraîne que le repère de centrage de la lentille ne se trouve pas dans l'espace à la position correspondant à celle affichée sur l'écran.

En alignant l'image du repère de centrage et la mire, une erreur systématique de positionnement du gland est introduite.

Ceci est également vrai pour la détermination de l'orientation du gland réalisée par rapport à l'image des repère d'axage de la lentile.

Une solution à ce problème consiste à déterminer une ou plusieurs caractéristiques de réfraction de la lentille, comme par exemple sa puissance sphérique, et de corriger le positionnement du gland sur la lentille en fonction de cette caractéristique.

Cependant, l'utilisation d'une plaque à motifs ou de marqueurs à la gouache disposés sur la lentille présente les inconvénients évoqués précédemment : les points de la plaque à motifs risquent de perturber l'utilisateur et d'empêcher un réglage précis en se superposant avec l'image des repères de centrage et d'axage de la lentille.

En outre, la qualité de l'image est dégradée et l'ajout d'éléments supplémentaires dans le montage optique peut être coûteux et fastidieux pour l'utilisateur.

OBJET DE L'INVENTION

Afin de remédier aux inconvénients précités de l'état de la technique, la présente invention propose une méthode de détermination d'une caractéristique de réfraction de la lentille facile à mettre en oeuvre et économique.

A cet effet, on propose selon l'invention un procédé conforme à la revendication 1.

Ce procédé permet ainsi de déterminer une caractéristique de réfraction de la lentille comme sa puissance sphérique ou sa déviation prismatique, soit en visée projetée, en capturant une image du support du côté de ce support opposé à celui comportant la lentille ophtalmique, soit en visée directe, en capturant une image du support du côté de la lentille.

Grâce à l'utilisation de l'élément de soutien du support dont les caractéristiques géométriques sont déterminées et connues, il n'est pas nécessaire d'ajouter un élément supplémentaire au montage. La qualité d'image n'est pas dégradée et la visualisation des repères de la face avant de la lentille est peu perturbée.

En particulier, dans le cas d'une capture d'image en visée projetée, le procédé selon l'invention présente les caractéristiques suivantes :

les moyens d'éclairement étant disposés d'un côté dudit support,

- à l'étape c), on capture une image de l'ombre projetée du support éclairé par lès rayons issus desdits moyens d'éclairement et ayant traversés la lentille à l'aide desdits moyens de capture d'image disposés du côté dudit support opposé aux moyens d'eclairement,
- à l'étape d), on identifie sur cette image l'ombre projetée dudit élément de soutien du support sous l'éclairage des moyens d'éclairement et on détermine au moins une caractéristique représentative de la position de cette ombre projetée,

- à l'étape e), on déduit au moins de cette caractéristique représentative de la position de l'ombre projetée de l'élément de soutien, ladite,caractéristique de réfraction recherchée.

Ainsi, selon ce procédé, on utilise la déformation et/ou le déplacement de l'ombre de l'élément de soutien de la lentille lorsque celle-ci est en place sur le support pour déterminer une caractéristique dé réfraction de la lentille posée sur cè support, par exemple la puissance sphérique ou la déviation prismatique de cette lentille.

Grâce au procédé selon, l'invention, il est ainsi possible de déterminer une caractéristique de réfraction de la lentille, par exemple sa puissance sphérique, de manière précise et facile, sans utiliser une plaque à motifs, donc sans ajout d'un élément optique supplémentaire au montage, de façon particulièrement économique.

L'utilisation de ce procédé dans un dispositif centreur-bloqueur est particulièrement avantageuse puisqu'elle permet de déterminer une caractéristique de réfraction de la lentille sans écarter la lentille du dispositif de capture d'image.

Il est alors possible soit de corriger les positions des repères dé centrage et/ou d'axage détectés par le dispositif centreur-bloqueur et d'afficher ces positions corrigées, soit de corriger la position de la mire affichée afin de placer précisément le gland sur la lentille.

On comprend que ce procédé peut être utilisé pour toute application pour laquelle une valeur d'une caractéristique de réfraction de la lentille doit être déterminée de manière économique, sans utiliser une plaque à motifs dédiée ou un élément optique supplémentaire.

De préférence, on utilise un support comportant au moins trois éléments de soutien, on identifie sur l'imagé l'ombre projetée de chaque élément de soutien du support, et on détermine au moins une caractéristique représentative de la position de l'ombre projetée de chaque élément de soutien.

D'autres caractéristiques avantageuses et non limitatives de l'invention sont énoncées dans les revendications 2 à 8.

L'invention concerne également un procédé de centrage d'un gland de conforme à la revendication 10.

Dans le cas d'une capture d'image en visée directe, le procédé selon l'invention comporte les étapes énoncées à la revendication 9.

L'invention concerne également un procédé de centrage, par rapport à un repère de référence, d'une lentille ophtalmique comportant un repère de centrage destiné à être mis en correspondance avec ledit repère de référence, conforme à la revendication 11.

L'invention concerne enfin un dispositif pour la mise en oeuvre du procédé de détermination d'au moins une caractéristique de réfraction d'une lentille ophtalmique décrit précédemment, conforme à la revendication 12.

En pratique, le support de ce dispositif comporte au moins trois éléments de soutien distincts.

D'autres caractéristiques avantageuses et non limitatives du dispositif selon l'invention sont énoncées dans les revendications 13 et 14.

## DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :

- la figure 1 est un schéma optique d'un dispositif en visée projetée autorisant la mise en oeuvre du procédé selon l'invention,
- la figure 2 est une vue en perspective du support de la lentille dans le dispositif de la figure 1,
- les figures 3 et 4 sont des vues schématiques des images des ombres des éléments de soutien du support de la lentille imagés en l'absence (figure 3) ou en présence (figure 4) de la lentille,
- la figure 5A est une vue de détail de l'ombre de l'un des éléments de soutien de la lentille de la figure 4, sur laquelle les hachures représentent différents niveaux de gris,
- les figures 5B à 5D représentent le contour de l'ombre de la figure 5A à différentes étapes de traitement de l'image représentée sur cette figure 5A,
- la figure 6 est une vue d'ensemble d'un dispositif centreur-bloqueur utilisant le procédé selon l'invention,
- la figure 7 est une vue schématique de l'image affichée par l'écran d'affichage du dispositif centreur-bloqueur de la figure 6,
- la figure 8 est un schéma optique d'un dispositif en visée directe autorisant la mise en oeuvre du procédé selon l'invention.

Les éléments identiques représentés sur différentes figures seront identifiés par les mêmes références.

Les figurés 1 et 8 représentent de manière schématique deux modes de réalisation d'un dispositif conforme à l'invention permettant de déterminer au moins une caractéristique de réfraction d'une lentille ophtalmique 20.

Il peut s'agir d'une lentille unifocale, bifocale, trifocale ou encore d'une lentille ophtalmique à addition progressive de puissance.

La caractéristique de réfraction recherchée est l'une des caractéristiques suivantes : le centre optique, la puissance sphérique, la puissance cylindrique et l'orientation de l'axe du cylindre de puissance, la puissance prismatique et l'orientation de l'arête du prisme de puissance.

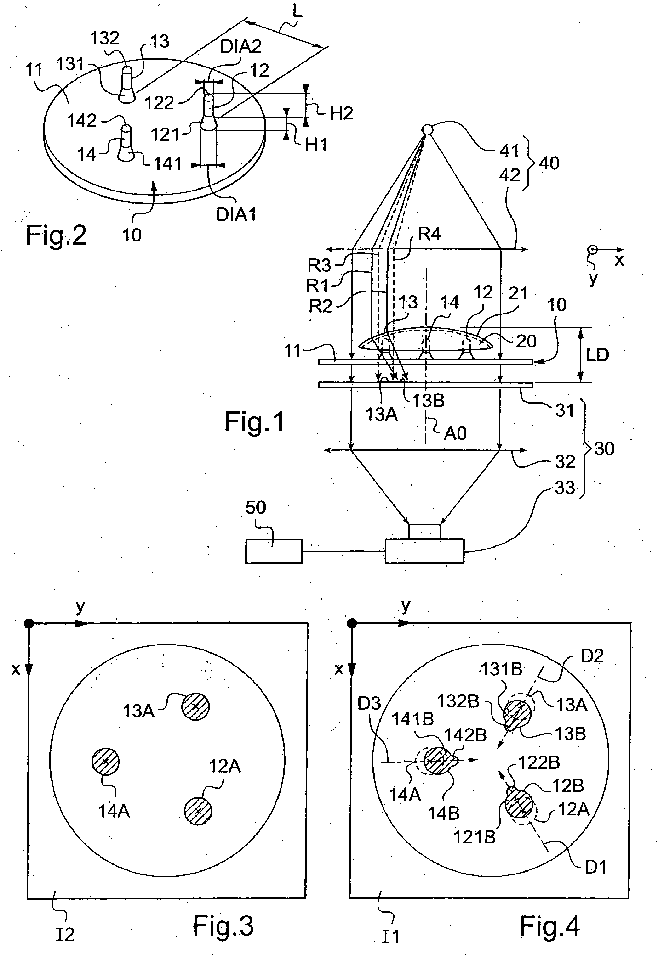

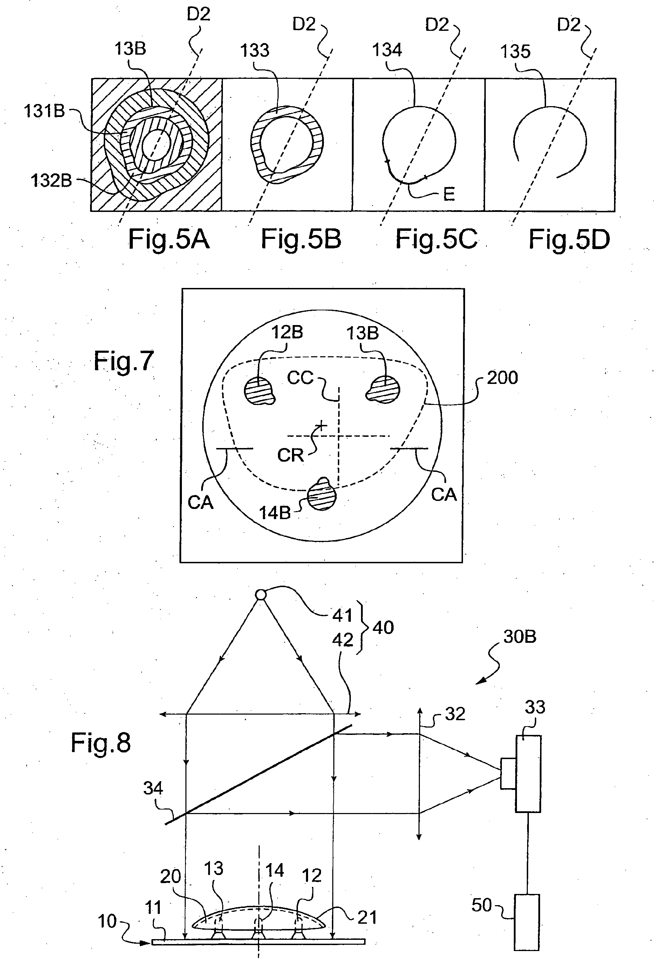

Pour cela, comme le montre schématiquement les figures 1 et 8, ce dispositif comprend avantageusement :

- un support 10 adapté à recevoir ladite lentille ophtalmique 20, comportant au moins un élément de soutien 12, 13, 14, en contact avec l'une des faces principales de la lentille ophtalmique 20 en une zone de contact de surface réduite par rapport à la surface des faces principales de cette lentille,
- des moyens d'éclairement 40,
- des moyens de capture d'image 30, 30B,
- des moyens de traitement d'image 50 adaptés à identifier sur une image capturée par lesdits moyens de capture d'image, dans un plan de capture d'image sensiblement perpendiculaire à un axe optique AO de la lentille, l'image du support 20, à déterminer au moins une caractéristique représentative de la géométrie de l'élément de soutien de ce support et à déduire de cette caractéristique représentative ladite caractéristique de réfraction recherchée.

Le support 10 comporte au moins deux éléments de soutien 12, 13, 14.

Plus particulièrement ici, comme le montrent les figures, le support 10 comporte trois éléments de soutien 12, 13, 14 distincts, qui sont chacun en contact avec la face principale arrière de la lentille ophtalmique 20 en une zone de contact de surface réduite par rapport à la surface de cette face principale arrière.

Les zones de contact des éléments de soutien 12, 13, 14 avec la lentille ophtalmique 20 sont entièrement séparées les unes des autres.

Ici, comme cela est notamment visible sur les figures 1 à 4, les zones de contact entres les éléments de soutien 12, 13, 14 et la lentille ophtalmique 20 sont distinctes et éloignées les unes des autres.

Selon le procédé de détermination d'au moins une caractéristique de réfraction d'une lentille 20 ophtalmique conforme à l'invention :

a) on dispose la lentille 20 sur le support 10,

b) on éclaire la lentille 20 posée sur son support 10 à l'aide de moyens d'éclairement 40,

c) on capture, à l'aide de moyens de capture d'image 30, dans un plan de capture d'image sensiblement perpendiculaire à un axe optique de la lentille 20, une image du support 10 éclairé par les rayons issus desdits moyens d'éclairement ayant traversés ladite lentille 20,

d) on identifie, sur cette image, l'image d'au moins un élément de soutien 12, 13, 14 du support 10 et on détermine au moins une caractéristique représentative de la géométrie de cette image de l'élément de soutien du support 10,

e) on déduit au moins de cette caractéristique représentative de la géométrie de l'image de l'élément de soutien du support 10, ladite caractéristique de réfraction recherchée.

Plus précisément, selon le mode de réalisation en visée projetée représenté sur les figures 1 à 7 annexées,

- les moyens d'éclairement 40 sont disposés d'un côté du support 10,
- lesdits moyens de capture d'image 30 sont disposés du côté dudit support 20 opposé auxdits moyens d'éclairement 40,
- les moyens de traitement d'image 50 sont adaptés à identifier sur une image capturée l'ombre projetée d'au moins un élément de soutien 12, 13, 14 du support 10, à déterminer au moins une caractéristique représentative de la position de celle-ci et à déduire de cette caractéristique représentative de la position de l'ombre projetée de l'élément de soutien 12, 13, 14, ladite caractéristique de réfraction recherchée.

De préférence ici, les moyens de traitement d'image 50 sont adaptés à identifier sur une image capturée l'ombre projetée de chaque élément de soutien 12, 13, 14 du support 10, à déterminer au moins une caractéristique représentative de la position de chacune d'entre elles et à déduire de ces caractéristiques représentatives de la position de l'ombre projetée de chaque élément de soutien 12, 13, 14, ladite caractéristique de réfraction recherchée.

Le support 20 comporte ici une plaque d'embase 11 transparente à partir de laquelle s'élèvent lesdits éléments de soutien 12, 13, 14.

Comme représenté sur la figure 2, chaque élément de soutien 12, 13, 14 comporte une base 121, 131, 141 prolongée par un embout 122, 132, 142 de largeur inférieure à celle de ladite base 121, 131, 141.

Chaque élément de soutien 12, 13, 14 comporte au moins une partie opaque, de préférence leur base 121, 131, 141. Ici les éléments de soutien 12, 13, 14 sont entièrement opaques.

La base 121, 131, 141 de chaque élément de soutien 12, 13, 14 est par exemple réalisée en matériau plastique et l'embout 122, 132, 142 de chaque élément de soutien 12, 13, 14 est réalisé dans un matériau plastique présentant une rigidité inférieure à celle du matériau utilisé pour réaliser la base 121, 131, 141 de l'élément de soutien. En outre, l'extrémité libre de l'embout de chaque élément de soutien 12, 13, 14 est de préférence de forme arrondie.

En variante, l'embout de chaque élément de soutien peut être réalisé dans un matériau plastique transparent.

Le mode de réalisation précité des éléments de soutien permet d'assurer une réception efficace de la lentille ophtalmique 20 sans endommager celle-ci.

Les éléments de soutien 12, 13, 14 sont en contact avec la lentille en trois zones de contact de surface réduite par rapport à la surface des faces principale de cette lentille. La zone de contact de chaque élément de soutien avec la face arrière de la lentille présente typiquement une surface inférieure à 10 pour cent de la surface de la face arrière de la lentille. En d'autres termes, le diamètre des embouts 122, 132, 142 des éléments de soutien est très inférieur au diamètre de la lentille, de préférence inférieur à un cinquième du diamètre de la lentille.

La plaque d'embase 11 est plane, réalisée par exemple dans un matériau plastique transparent. La base 121, 131, 141 de chaque élément de soutien 12, 13, 14 est rapportée sur cette plaque d'embase 11, par exemple collée ou vissée sur cette plaque d'embase 11.

Avantageusement, le support 10 est amovible, ce qui permet d'utiliser des supports interchangeables présentant des éléments de soutien de différentes tailles et espacés de différents écarts en fonction de la lentille ophtalmique 20 à recevoir.

Dans l'exemple représenté sur les figures, le support 10 est adapté à recevoir des lentilles ophtalmiques de taille standard, de puissance inférieure ou égale à 8 dioptries et non taillées.

Les éléments de soutien 12, 13, 14 sont alors espacés deux à deux d'une distance L égale à 35 millimètres (figure 2) et présentent une hauteur H2 totale de 15 millimètres. Leur base 121, 131, 141 présente une forme tronconique dont le diamètre DIA1 au niveau de la plaque d'embase 11 est égale à 7 millimètres et dont la hauteur H1 est égale à 5 millimètres.

L'embout 122, 132, 142 présente une forme cylindrique de diamètre DIA2 égale à 5 millimètres (figure 2).

D'autres supports, adaptés par exemple à recevoir des lentilles ophtalmiques de plus fortes cambrures et de plus grands diamètres comportent des éléments de soutien de forme similaire espacés de 45 millimètres et présentant une hauteur totale égale à 25 millimètres.

Au contraire, pour recevoir une lentille ophtalmique à retailler, donc déjà taillée et de plus petites dimensions, on utilisera un support dont les éléments de soutien sont espacés d'une distance inférieure à 35 millimètres, et de hauteur totale inférieure ou égale à 15 millimètres.

Dans l'exemple représenté sur les figures, les moyens d'éclairement 40 comprennent une source de lumière 41 qui émet un faisceau lumineux divergent en direction d'une lentille convergente 42. La source de lumière 41 est disposée au foyer optique de la lentille convergente 42, de telle sorte que le faisceau lumineux émergeant des moyens d'éclairement 40 en direction de la lentille ophtalmique 20 reçue sur le support 10 soit parallèle.

On pourrait alternativement envisager que les moyens d'éclairement comportent une source de lumière et un système de renvoi comportant un miroir incliné à 45° et une lentille convergente adapté à éclairer par un faisceau lumineux parallèle la lentille ophtalmique déposée sur le support.

Comme représenté sur la figure 1, les rayons lumineux R1, R2, représentés en traits pleins, issus des moyens d'éclairement 40 sont déviés lors de leur passage à travers la lentille 20 et éclairent les éléments de soutien 12, 13, 14 du support 10. Ces rayons lumineux déviés R1, R2 projettent une ombre 12B, 13B, 14B des éléments de soutien 12, 13, 14. On a représenté plus particulièrement sur la figure 1, l'ombre 13B de l'élément de soutien 13.

Les rayons lumineux R3, R4 représentés en pointillés sur la figure 1 montrent le trajet des rayons lumineux qui projettent une ombre 12A, 13A, 14A des éléments de soutien 12, 13, 14 lorsque la lentille 20 n'est pas posée sur le support 10. Ces rayons R3, R4 ne sont pas déviés. On a représenté plus particulièrement sur la figure 1 l'ombre 13A de l'élément de soutien 13.

Les moyens de capture d'image 30 comprennent ici une caméra numérique 33, une autre lentille convergente 32 et un écran dépoli 31.

En variante, on peut utiliser en remplacement de la caméra numérique 33 tout appareil permettant une capture d'image numérique.

La lentille convergente 32 est positionnée de manière à faire converger les rayons lumineux ayant traversés la lentille ophtalmique sur le capteur de la caméra numérique 33 de manière à ce que l'image enregistrée par la caméra couvre l'ensemble de la lentille ophtalmique.

On peut également envisager l'utilisation d'un système optique de renvoi du faisceau lumineux transmis par la lentille ophtalmique comportant un miroir incliné à 45° qui permettrait à la caméra numérique de recueillir via le renvoi angulaire optique opéré par le miroir incliné, les ombres projetées sur l'écran dépoli.

L'écran dépoli 31 forme une surface de projection des ombres des éléments de soutien 12, 13, 14 du support 10 et de la lentille 20 permettant leur visualisation.

De préférence, le support 10, l'écran dépoli 31 et le capteur de la caméra numérique 33 s'étendent dans des plans perpendiculaires à l'axe optique AO de la lentille 20. Le plan de capture d'image de la caméra numérique 33 est ainsi sensiblement parallèle à l'écran dépoli 31 et à l'embase 11 du support 10.

En outre, le support 10 et l'écran dépoli 31 sont de préférence écartés d'une distance au moins égale à 0,5 centimètres.

En variante, on peut envisager que les ombres de la lentille et du support soient projetées directement sur le capteur de la caméra numérique, en l'absence d'écran dépoli.

On peut aussi envisager que l'embase du support forme une surface dépolie adaptée à la visualisation des ombres projetées sur elle.

Dans ce cas, la partie de chaque élément de soutien en contact avec la surface dépolie ne présente pas d'ombre projetée, et l'on utilise l'ombre projetée d'une autre partie de l'élément de soutien, par exemple l'ombre de l'extrémité libre de cet élément de soutien ou d'une partie intermédiaire située entre l'extrémité libre et la partie en contact avec ladite surface dépolie.

Les moyens de traitement d'image 50 (figure 1) sont adaptés à traiter le signal obtenu en sortie de la caméra numérique 33 selon les étapes expliquées plus en détail ci-après.

Selon le procédé conforme à l'invention, pour déterminer la caractéristique de réfraction cherchée de la lentille, dans une étape a), l'utilisateur dispose la lentille 20 sur les trois éléments de soutien 12, 13, 14 du support 10.

Puis, dans une étape b), il éclaire la lentille 20 posée sur son support 10 à l'aide des moyens d'éclairement 40.

Enfin, dans une étape c), il déclenche la capture, dans le plan de capture d'image sensiblement perpendiculaire à l'axe optique AO de la lentille, d'une image de l'ombre projetée de la lentille 20 et du support 10 éclairés par les moyens d'éclairement 40.

La figure 4 représente schématiquement une image I1 de l'ombre du support 10 projetée sur le dépoli 31, capturée à l'étape c) en présence de la lentille 20 disposée sur le support 10.

Les ombres 12B, 13B, 14B des éléments de soutien 12, 13, 14 sont hachurées.

Pour comparaison, la figure 3 représente schématiquement une image I2 du support 10 capturée en l'absence de la lentille 20. Les ombres 12A, 13A, 14A des éléments de soutien 12, 13, 14 sont hachurées.

Comme le montre la figure 3, en l'absence de lentille, les ombres 12A, 13A, 14A des éléments de soutien 12, 13, 14 sont circulaires, de même diamètre que les bases 121, 131, 141 des éléments de soutien et disposées au droit de ces éléments de soutien, donc écartées d'une même distance que les éléments de soutien eux-mêmes.

Comme le montre la figure 4, en présence de la lentille 20, les ombres 12B, 13B, 14B des éléments de soutien 12, 13, 14 de la lentille sont déplacées et déformées en raison de la déviation des rayons lumineux. La figure 4 montre en pointillés le contour des ombres 12A, 13A, 14A des éléments de soutien 12, 13, 14 en l'absence de la lentille 20 pour comparaison.

De manière remarquable, dans une étape d), les moyens de traitement d'image 50 identifient sur l'image I1 capturée en présence de la lentille 20 les ombres projetées 12B, 13B, 14B desdits éléments de soutien 12, 13, 14 du support 10 sous l'éclairage des moyens d'éclairement 40 et déterminent, pour chacune de ces ombres 12B, 13B, 14B, au moins une caractéristique représentative de la position de cette ombre 12B, 13B, 14B sur l'image I1 capturée.

En pratique, cette étape d) est réalisée grâce aux sous-étapes décrites ci-dessous. Ces sous-étapes sont plus particulièrement illustrées sur les figures 5A à 5D dans le cas de l'ombre 13B de l'élément de soutien 13 en présence de la lentille 10.

Dans une sous-étape d1), les moyens de traitement d'image 50 effectuent sur l'image capturée à l'étape c), représentée agrandie sur la figure 5A, une recherche d'un contour estimé 134 partiel ou total du contour de l'ombre 12B, 13B, 14B projetée de chaque élément de soutien 12, 13, 14 du support 10, comme représenté sur la figure 5B.

L'image I1 capturée à l'étape c) est plus précisément une image numérique en niveaux de gris. Sur la figure 5A, différents niveaux de gris sont schématisés par des hachures différentes.

Sur cette image I1 numérique, chaque pixel présente une valeur d'intensité déterminée comprise par exemple entre 0 et 255, le niveau 0 correspondant à une intensité minimale, c'est-à-dire à une couleur noire et le niveau 255 correspondant à une intensité maximale, c'est-à-dire à une couleur blanche.

Dans ces conditions, à l'étape d1), les moyens de traitement d'image 50 réalisent une étape de mesure des transitions en niveaux de gris et une étape de binarisation au cours de laquelle une première valeur d'intensité est attribuée aux pixels de ladite image I1 présentant initialement une valeur d'intensité inférieure à une valeur seuil d'intensité, et une deuxième valeur d'intensité est attribuée aux pixels présentant initialement une valeur d'intensité supérieure à cette valeur seuil d'intensité.

La valeur seuil d'intensité est prédéterminée lors d'une étape de calibrage. Cette valeur seuil peut être déterminée en fonction d'un niveau de gris typique de l'image, par exemple en fonction d'un niveau de gris moyen dans une zone délimitée autour de l'image de chaque plot.

Par exemple, on attribue la valeur 0 aux pixels dont l'intensité est inférieure à 200 et on attribue la valeur 255 aux pixels dont l'intensité est supérieure à 200.

Cette étape de binarisation permet de déterminer un premier ensemble de pixels délimitant un premier contour grossier 133 de l'ombre 13B de chaque élément de soutien 13. On obtient une image en noir et blanc, sur laquelle le contour grossier 133 de chaque élément de soutien 12, 13, 14 apparaît dans l'exemple de réalisation décrit ici blanc sur fond noir. Ce contour grossier 133 est représenté hachuré sur la figure 5B.

Il est également possible de prédéterminer des régions de l'image dans lesquelles les ombres 12B, 13B, 14B des éléments de soutien sont contenues et de n'effectuer l'étape de binarisation et les étapes ultérieures que dans ces régions prédéterminées de l'image.

Les moyens de traitement d'image 50 recherchent ensuite les pixels du premier ensemble de pixels définissant ledit contour grossier 133 pour lesquels ladite valeur d'intensité passe de ladite première valeur à ladite deuxième valeur. Ceci correspond à une recherche de gradient maximum lors du passage à un pixel voisin.

En pratique, un barycentre de ce premier ensemble de pixels est déterminé, puis à partir de ce barycentre, dans toutes les directions autour de celui-ci, les pixels dudit premier ensemble présentant un gradient d'intensité maximum, c'est-à-dire une variation d'intensité d'amplitude maximum lorsqu'on passe de ce pixel à un pixel voisin, sont identifiés.

Les pixels ainsi sélectionnés forment un second ensemble de pixels correspondant audit contour estimé 134 de l'ombre 13B de l'élément de soutien 13 considéré, représenté sur la figure 5C.

Comme représenté sur la figure 5C, ce contour estimé 134 n'est pas circulaire. La projection de l'ombre des éléments de soutien 12, 13, 14 par les rayons lumineux déviés par la lentille 20 est en effet déplacée et déformée par rapport à l'ombre portée par les rayons lumineux non déviés par la lentille.

Plus précisément, l'ombre 12B, 13B, 14B de l'élément de soutien 12, 13, 14 correspond à la superposition de l'ombre 121A, 131A, 141A de la base 121, 131, 141 de chaque élément de soutien 12, 13, 14 et de l'ombre 122B, 132B, 142B de l'extrémité de l'embout 122, 132, 142 de l'élément de soutien 12, 13, 14 correspondant (figures 4 et 5A).

L'ombre 121A, 131A, 141A de la base 121, 131, 141 de l'élément de soutien 12, 13, 14 présente alors une forme elliptique, et l'extrémité de l'ombre 122B, 132B, 142B de l'embout 122, 132, 142 de l'élément de soutien 12, 13, 14 fait saillie de l'ombre de la base 121, 131, 141 (figure 5A).

Il est cependant possible de déterminer, dans une sous-étape d2), une première position approximative de l'ombre 12B, 13B, 14B de chaque élément de soutien 12, 13, 14, cette première position étant déterminée comme la position d'un centre géométrique du contour estimé 134 de l'ombre projetée 13B de chaque élément de soutien du support.

Pour cela, les moyens de traitement d'image 50 déterminent la position de l'ellipse ou du cercle modélisant au mieux le contour estimé 134 de chaque ombre 12B, 13B, 14B. La position du centre géométrique du contour estimé 134 est alors déterminée comme étant celle du centre géométrique de cette ellipse ou de ce cercle.

En pratique, ladite première position de l'ombre 12B, 13B, 14B de chaque élément de soutien est déterminée par les coordonnées (X112, Y112), (X113, Y113), (X114, Y114) dudit centre géométrique de l'ellipse ou du cercle dans un référentiel (X,Y) attaché au plan de capture d'image. Ces coordonnées sont par exemple exprimées en centièmes de pixel selon un axe X et selon un axe Y perpendiculaire à l'axe X, en prenant pour origine un point du plan de capture d'image correspondant à l'un des coins de l'image capturée.

Les moyens de traitement d'image 50 comparent alors, dans une étape d3), pour chaque élément de soutien 12, 13, 14 du support, la position (X112, Y112), (X113, Y113), (X114, Y114) du centre géométrique du contour estimé 134 déterminée à l'étape d2) à une position de référence (X012, Y012); (X013, Y013), (X014, Y014) d'un centre géométrique de l'ombre projetée du même élément de soutien 12, 13, 14 en l'absence de lentille.

Les moyens de traitement d'image 50 en déduisent alors le déplacement de l'ombre projetée 12B, 13B, 14B de chaque élément de soutien 12, 13, 14 du support 10 entre cette position de référence et la première position déterminée à l'étape d2).

Cette position de référence (X012, Y012), (X013, Y013), (X014, Y014) est déterminée, dans le même référentiel (X, Y) que la première position (X112, Y112), (X113, Y113), (X114, Y114) déterminée à l'étape d2), lors d'une étape préliminaire à la mise en oeuvre du procédé selon l'invention.

Dans cette étape préliminaire, l'utilisateur déclenche la capture de l'image I2 du support 10 en l'absence de la lentille 20 (figure 3). Sur l'image I2 ainsi capturée, les moyens de traitement d'image 50 identifient le contour estimé des ombres 12A, 13A, 14A des éléments de soutien 12, 13, 14 du support 10, de la même façon que celle exposée précédemment pour le traitement de l'image capturée en présence de la lentille 20.

Puis, le centre de l'ellipse ou du cercle modélisant au mieux l'ensemble de pixels du contour estimé ainsi déterminé est mis en mémoire comme position de référence de l'ombre 12A, 13A, 14A de chaque élément de soutien.

Ainsi à l'étape d3), en comparant la première position (X112, Y112), (X113, Y113), (X114, Y114) de l'ombre 12B, 13B, 14B de chaque élément de soutien avec la position de référence (X012, Y012), (X013, Y013), (X014, Y014) correspondante, les moyens de traitement d'image 50 déterminent les coordonnées (T1X, T1Y), (T2X, T2Y) et (T3X, T3Y) d'un vecteur T1, T2, T3 représentant le déplacement le l'ombre de chaque élément de soutien 12, 13, 14 dans le référentiel (X,Y) considéré avec

$$T1X = X112\text{-}X012,$$

$$T1Y = Y112\text{-}Y012,$$

$$T2X = X113\text{-}X013,$$

$$T2Y = Y113\text{-}Y013,$$

$$T3X = X114\text{-}X014$$

et

$$T3Y = Y114\text{-}Y014.$$

Les moyens de traitement d'image 50 déterminent ainsi la direction D1, D2, D3 du déplacement, son sens et la longueur de ce déplacement (figures 4 et 5A à 5D).

Selon le procédé conforme à l'invention, dans une étape e), les moyens de traitement d'image 50 déduisent au moins de l'une des caractéristiques représentatives des positions des ombres projetées 12B, 13B, 14B déterminées à l'étape d) ladite caractéristique de réfraction recherchée.

Plus précisément ici; à l'étape e), les moyens de traitement d'image 50 déduisent du déplacement T d'au moins un des éléments de soutien du support déterminé à l'étape d3) la caractéristique de réfraction recherchée.

Pour cela, dans une sous-étape e1), les moyens de traitement d'image 50 déterminent un contour corrigé 135 (figure 5D) de l'ombre 12B, 13B, 14B projetée de chaque élément de soutien 12, 13, 14 du support 10 en présence de la lentille 20, à partir du contour estimé 134 déterminé à l'étape d1), en éliminant de ce contour estimé 134 un ensemble E de points situé autour de la direction D1, D2, D3 du déplacement déterminée à l'étape d3) (figure 5C).

Cet ensemble E de points englobe au moins les points du contour estimé 134 correspondant à l'extrémité de l'ombre 122B, 132B, 142B de l'embout 122, 132, 142 de l'élément de soutien 12, 13, 14. L'ombre 122B, 132B, 142B de l'embout de l'élément de soutien s'étend en effet selon la direction de déplacement D1, D2, D3.

On peut par exemple prévoir que l'ensemble de points éliminés comporte tous les points du contour estimé 134 situés dans un espace angulaire interceptant un angle compris entre 0 et 180 degrés, par exemple égale à 40 degrés, centré sur la direction de déplacement D1, D2, D3 (figures 5C et 5D).

Le contour corrigé 135 obtenu dans le cas de l'élément de soutien 13 est représenté sur la figure 5D.

On peut également prévoir que si la longueur du déplacement de l'ombre 12B, 13B, 14B de l'élément de soutien 12, 13, 14 est inférieur à un pixel, on élimine aucun point du contour estimé 134. C'est le cas des lentilles ophtalmiques de faibles puissances.

Dans le cas général, il est alors possible de déterminer une deuxième position (X212, Y212), (X213, Y213), (X214, Y214) de l'ombre 12B, 13B, 14B sur la base du contour corrigé 135, plus précise que la première position (X112, Y112), (X113, Y113), (X114, Y114) déterminée à l'étape d2) car l'erreur sur la détermination de l'ellipse ou du cercle modélisant au mieux le contour estimé 134, due à la présence de l'extrémité de l'ombre 122B, 132B, 142B de l'embout 122, 132, 142 de l'élément de soutien 12, 13, 14 est éliminée.

Ainsi, dans une étape e2), les moyens de traitement d'image 50 modélisent le contour corrigé 135 de l'ombre 12B, 13B, 14B projetée de chaque élément de soutien 12, 13, 14 du support par un contour modèle. Pour cela, ils déterminent l'ellipse ou le cercle modélisant au mieux le contour corrigé 135.

Dans une étape e3), ils déterminent le centre de ce contour modèle circulaire ou ellipsoïdale et mettent en mémoire la position de ce centre, qui est identifiée à la deuxième position (X212, Y212), (X213, Y213), (X214, Y214) de l'ombre 12B, 13B, 14B correspondante.

Dans une étape e4), les moyens de traitement d'image 50 déduisent de cette deuxième position (X212, Y212), (X213, Y213), (X214, Y214) de l'ombre 12B, 13B, 14B déterminée à l'étape e3) et de la position de référence (X012, Y012), (X013, Y013), (X014, Y014) de l'ombre 12A, 13A, 14A du même élément de soutien 12, 13, 14 déterminée lors de l'étape préliminaire, la caractéristique de réfraction recherchée.

Pour cela, les moyens de traitement d'image 50 calculent les inclinaisons (PX1, PY1), (PX2, PY2), (PX3, PY3) des rayons lumineux déviés R1, R2 en sortie de la lentille 20 correspondant aux positions des ombres de chaque élément de soutien.

Ces inclinaisons sont déterminées selon des directions parallèles aux axes X et Y du référentiel de capture d'image, en fonction du déplacement de l'ombre des éléments de soutien 12, 13, 14 entre la position de référence et la deuxième position déterminée.

Plus précisément ici, avec S la puissance sphérique de la lentille, C le cylindre de la lentille, a l'angle d'inclinaison de l'axe du cylindre de la lentille, et PX et PY les prismes de la lentille suivant les axes X et Y du référentiel attaché au plan de capture d'image, le procédé selon l'invention autorise la détermination des caractéristiques de réfraction PX, PY et a de la lentille ainsi que les caractéristiques S et C selon les relations suivantes :

$$S = (1/2)*(S + C*cos(2*a)) + (1/2)*(S - C*cos(2*a))$$

et

$$C = sqrt\{ ( (1/2)*(S + C*cos(2*a)) - (1/2)*(S - C*cos(2*a)) )^2 + (C*sin(2*a))^2 \} \text{ avec sqrt la fonction racine carrée.}$$

Les moyens de traitement d'image 50 peuvent alors également déterminer les coordonnées (XCO, YCO) du centre optique de la lentille 20 comme les coordonnées du point par lequel les rayons lumineux ne sont pas déviés et il vient :

$$XCO = - \{ PX + C*sin(2*a)*YCO \} / \{ S + C*cos(2*a) \}$$

et

$$YCO = \{ (C*sin(2*a)*PX - PY*(S + C*cos(2*a)) \} / \{ (S - C*cos(2*a))*(S + C*cos(2*a)) - (C*sin(2*a))^2 \}.$$

Le procédé selon l'invention autorise donc la détermination de toutes les caractéristiques de réfraction précitées, sans utiliser d'éléments optiques spécifiques comme une plaque à motifs.

La détermination de la puissance sphérique S par ce procédé est par exemple réalisée à environ 0,5 dioptries près.

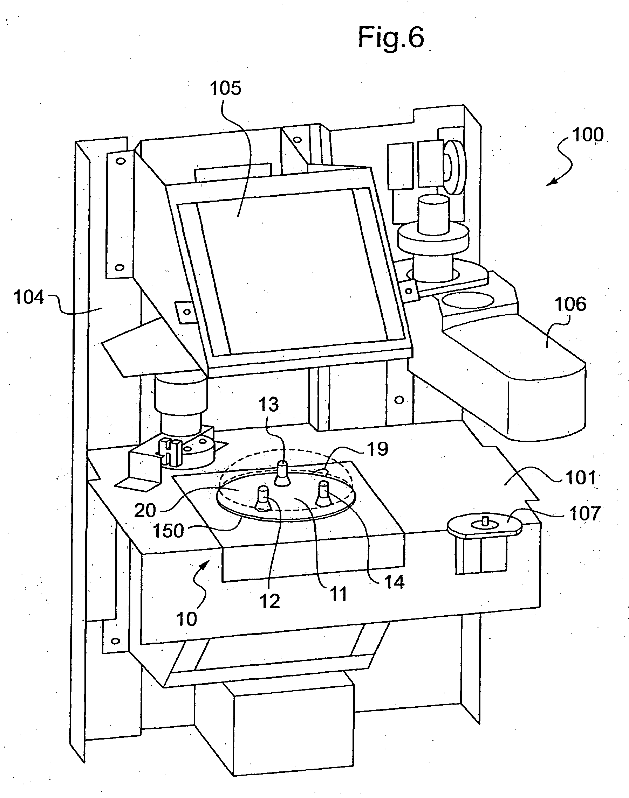

Sur la figure 6, on a représenté schématiquement un mode de réalisation d'un dispositif centreur-bloqueur 100 adapté à mettre en oeuvre le procédé selon l'invention qui comporte un pupitre de travail 101 sur lequel est disposé le support 10 de la lentille ophtalmique 20.

Le dispositif centreur-bloqueur 100 comporte en outre un écran de visualisation 105 fixé sur le bâti 104 de manière à être orienté pour être visible de l'utilisateur travaillant au pupitre de travail 101.

Par ailleurs, comme le montre la figure 6, le dispositif centreur-bloqueur 100 comporte un bras de positionnement 106, automatisé ou non, relié au bâti 104, et adapté à prendre à l'aide d'une pince un pion de préhension, aussi appelé « gland », disposé sur un réceptacle 107 et à venir le déposer à un emplacement invariable dans l'espace, qui est mis en correspondance avec un point déterminé par calcul sur la face avant de ladite lentille ophtalmique disposée sur le support 10.

Dans cette optique, le dispositif centreur-bloqueur 100 est adapté à déterminer le point de la surface de la lentille 20 au niveau duquel sera posé le gland et/ou l'orientation de ce gland en fonction de la position d'un repère de centrage et/ou d'axage de la lentille ophtalmique et des paramètres du client (écart pupillaire, hauteur par rapport au bas de la monture, angle d'astigmatisme...).

Le dispositif centreur-bloqueur 100 est pour cela adapté à détecter la position desdits repères de centrage et/ou d'axage de la lentille 20.

Le repère de centrage de la lentille se trouve au centre optique de la lentille dans le cas d'un verre unifocal, mais il est décalé par rapport à ce centre optique pour les autres types de lentilles : le repère de centrage est une croix de centrage pour les verres progressifs, ou le sommet d'une pastille de puissance différente pour les verres bifocaux.

Les repères d'axage sont par exemple constitués de traits horizontaux.

L'utilisation du procédé selon l'invention dans un dispositif centreur-bloqueur 100 tel que celui représenté sur la figure 6 est particulièrement avantageuse puisqu'elle permet de déterminer une caractéristique de réfraction comme la puissance sphérique de la lentille sans utiliser de plaque à motifs, afin de positionner plus précisément le gland sur la lentille.

Pour cela, le dispositif centreur-bloqueur 100 comprend avantageusement un dispositif similaire à celui représenté schématiquement sur la figure 1 et permettant de mettre en oeuvre le procédé selon l'invention, à savoir :

- le support 10 pour la lentille ophtalmique 20 tel que décrit précédemment,
- de part et d'autre de ce support, d'une part, les moyens d'éclairement 40 de la lentille ophtalmique 20 installée sur ledit support 10 et, d'autre part, des moyens d'acquisition et d'analyse de la lumière transmise par ladite lentille ophtalmique 20, comportant le dispositif de capture d'image 30 et les moyens de traitement d'image 50.

Le support 10 est ici reçu dans un logement de réception 150.

Dans l'exemple représenté sur les figures, un creux 19 est prévu dans le logement 150 au bord du support 10 pour permettre à l'utilisateur de glisser son doigt entre le bord du logement 150 et l'embase 11 du support 10, de manière à pourvoir soulever facilement le support 10. Celui-ci est ainsi facilement interchangeable.

Selon une autre variante, le support peut être soulevé par les éléments de soutien. Un creux similaire au creux 19 décrit précédemment peut alors coopérer avec une partie de détrompage du support afin d'assurer un positionnement précis de celui-ci.

Les étapes du procédé de glantage de la lentille selon l'invention sont les suivantes.

Etape i)

L'utilisateur place la lentille 20 sur le support 10 qui se trouve initialement dans son logement 150, centrée par rapport au dispositif de capture d'image 30 pour permettre la capture d'une image couvrant toute la lentille.

L'utilisateur réalise ensuite les étapes du procédé de détermination d'une caractéristique de réfraction de la lentille décrites précédemment.

Grâce à ce procédé, la puissance sphérique de la lentille, le cylindre de la lentille, l'angle d'inclinaison de l'axe du cylindre de la lentille et le prisme de la lentille suivant les axes X et Y du référentiel de capture d'image sont déterminés.

Etape j)

On éclaire la lentille 20 posée sur son support 10 à l'aide desdits moyens d'éclairement 40 disposés d'un côté dudit support 10, et on capture, dans ledit plan de capture d'image, une image CR de l'ombre projetée du repère de centrage de la lentille sous l'éclairage des moyens d'éclairement.

Cette étape peut être évidemment être réalisée simultanément avec la mise en oeuvre du procédé de détermination d'une caractéristique de réfraction de la lentille décrit précédemment.

Etape k)

Le dispositif centreur-bloqueur 100 affiche sur son écran de visualisation 105 (figure 7), d'une part, en direct des moyens d'acquisition et d'analyse, les ombres de la lentille ophtalmique 20, des repères de centrage CR et d'axage CA de la lentille 20 ainsi que les ombres 12B, 13B, 14B des éléments de soutien 12, 13, 14 du support 10, et d'autre part, une cible virtuelle de centrage CC correspondant à la position voulue du repère de centrage CR de la lentille à centrer par rapport à un point de référence. Ce point de référence est un point associé au cercle de la monture.

On affiche également sur l'écran de visualisation 105 une image virtuelle 200 représentative du cercle concerné de la monture.

Etape l)

Les moyens de traitement 50 déduisent de la puissance sphérique S de la lentille déterminée à l'étape i), une position d'affichage corrigée de la cible virtuelle CC de centrage et/ou de l'image de l'ombre projetée du repère de centrage CR.

Etape m)

On déplace la lentille ophtalmique de manière à faire coïncider sur l'écran de visualisation les positions corrigées de l'ombre du repère de centrage CR de la lentille 20 et de la cible virtuelle CC de centrage.

Cette étape peut être réalisée manuellement par l'utilisateur ou automatiquement par la commande manuelle ou automatique de moyens de déplacement d'une platine sur laquelle le support est disposé par le dispositif centreur-bloqueur 100.

Alternativement, les moyens de traitement d'image 50 déterminent à l'étape i) la position du centre optique de la lentille dans le plan de capture d'image, et en déduisent une position de glantage qui coïncide avec ou dépend de ce centre optique. Le déplacement de la lentille 20 est réalisé de manière à ce que le bras du dispositif centreur-bloqueur dépose le gland de préhension sur la lentille en cette position. Ce bras est actionné manuellement ou automatiquement par le dispositif centreur-bloqueur, comme décrit par exemple dans le document FR0412855 (équivalent de US11/806746).

Grâce au procédé selon l'invention, le gland est placé plus précisément sur la lentille 20.

En effet, sur la lentille ophtalmique 20, l'écart entre le centre optique de la lentille et son repère de centrage est en général compris entre 0 et 6 millimètres.

Si la distance LD entre la lentille et le dispositif de capture d'image 30, donc ici l'écran dépoli 31 est égale à 20 millimètres et si l'écart d entre le repère de centrage et le centre optique de la lentille est égale à 4 millimètres, lorsque l'image du repère de centrage CR est alignée avec la cible virtuelle CC de centrage sur l'écran de visualisation 105, le repère de centrage est en réalité décalé par rapport à l'emplacement repéré par la cible virtuelle CC d'une distance e = D*d*S = 0,08* S.

Ainsi, pour une lentille de puissance sphérique égale à 6 dioptries, la distance de décalage de l'image du repère de centrage CR affichée par le dispositif centreur-bloqueur 100 avant correction, et donc du gland placé sur la lentille par un tel dispositif, est de 0,48 millimètre.

L'erreur induite par la déviation des rayons lumineux par la lentille 20 sur l'orientation du gland peut de façon similaire atteindre 3 degrés d'angle avant correction par le dispositif centreur-bloqueur 100.

Grâce au procédé selon l'invention, il est possible de déterminer la puissance sphérique de la lentille à 0,5 dioptrie près, par exemple égale à 5,5 dioptries. Cela permet alors de corriger le centrage du gland pour réduire l'erreur à 0,04 millimètre au lieu de 0,48 millimètre.

De manière similaire, le procédé proposé permet également de déterminer le cylindre et l'axe du cylindre de la lentille. Il est alors possible de corriger l'erreur sur l'orientation du gland par rapport à la lentille faite en raison de la déformation de l'image due au cylindre de cette lentille.

Le positionnement du gland sur la lentille est donc beaucoup plus précis.

En outre, ce procédé est particulièrement économique à mettre en oeuvre, puisqu'il ne nécessite aucun élément optique supplémentaire.

La présente invention n'est nullement limitée aux modes de réalisation décrits et représentés mais l'homme du métier saura y apporter toute variante conforme à son esprit.

En particulier, on peut envisager que le gland comporte un embout transparent ne projetant pas d'ombre sur l'écran dépoli, ce qui simplifie le traitement de l'image en rendant inutiles les sous-étapes e1) à e4). Les caractéristiques de réfraction peuvent alors être déterminées à partir de la première position déterminée des ombres des éléments de soutien.

En outre, on peut prévoir un nombre quelconque d'éléments de soutien supérieur ou égal à un, de préférence supérieur ou égal à trois.

Le procédé selon l'invention a été décrit dans le cadre d'une capture d'image en visée projetée. Il est également possible d'utiliser les éléments de soutien du support pour déterminer la puissance sphérique de la lentille en visée directe. Un tel montage en visée directe est représenté sur la figure 8.

On entend par montage en visée directe un montage dans lequel les moyens d'éclairement et de capture d'image sont disposés du même côté du support 10 que la lentille 20.

La lentille 20 est ici éclairée comme précédemment par un faisceau lumineux parallèle issu de la source lumineuse 41 située au foyer de la lentille 42.

La lentille éclairée est imagée grâce à une lame semi-réfléchissante 34 que les rayons issus de la source lumineuse 41 traversent, mais qui réfléchit les rayons lumineux réfléchis par la lentille 20 et le support 10.

Cette lame semi-réfléchissante 34 est par exemple inclinée d'un angle de 45 degrés par rapport aux rayons lumineux incidents issus des moyens d'éclairement 41, 42.

Les rayons lumineux réfléchis par la lentille et le support sont alors renvoyés par la lame semi-réfléchissante 34 vers les moyens de capture d'image 30B comprenant ici la caméra numérique 33, la lentille convergente 32 et la lame semi-réfléchissante 34. La lentille convergente 32 est ici positionnée de manière à faire converger les rayons lumineux renvoyés par la lame semi-réfléchissante 34 sur le capteur de la caméra numérique 33 de sorte que l'image enregistrée par la caméra couvre l'ensemble de la lentille 20 ophtalmique.

L'image capturée montre l'image de chaque élément de soutien 12, 13, 14 vu à travers la lentille 20.

Ainsi, selon le procédé conforme à l'invention, lesdits moyens d'éclairement étant disposés d'un côté dudit support :

- à l'étape c), on capture une image du support éclairé par les rayons issus desdits moyens d'éclairement et ayant traversés ladite lentille à l'aide desdits moyens de capture d'image disposés du même côté dudit support que lesdits moyens d'éclairement,
- à l'étape d), on identifie sur cette image l'image de l'élément de soutien du support et on détermine au moins une caractéristique représentative de la géométrie de l'image dudit élément de soutien,
- à l'étape e), on déduit d'au moins cette caractéristique représentative de la géométrie de l'image dudit élément de soutien, ladite caractéristique de réfraction recherchée.

En pratique, la caractéristique de réfraction recherchée peut alors être déterminée d'une façon similaire à celle décrite précédemment dans le cas de la visée projetée, par un traitement similaire de l'image d'au moins un élément de soutien et non plus de l'image de l'ombre projetée d'au moins un élément de soutien. Ce traitement d'image permet alors d'identifier un contour de l'image d'au moins un élément de soutien.

Puis, on détermine la position du centre géométrique de ce contour et on déduit de la position du centre géométrique du contour et d'une position de référence du centre géométrique de l'image de l'élément de soutien en l'absence de lentille, la caractéristique de réfraction recherchée.

Comme précédemment, la position de référence du centre géométrique de l'image de l'élément de soutien en l'absence de lentille est déterminée lors d'une étape de calibration au cours de laquelle une image des éléments de soutien est capturée en l'absence de lentille, et traitée de manière à déterminer le centre géométrique d'au moins un élément de soutien.

En variante, on peut également déterminer une dimension transversale de l'image de l'élément de soutien, par exemple un diamètre de cette image et la comparer à la dimension transversale réelle correspondante de l'élément de soutien. La distance entre la lentille et la base des éléments de soutien étant connue ainsi que la distance entre le dispositif de capture d'image et la lentille, cette comparaison donne accès au grandissement de la lentille.

On déduit de ces mesures les même caractéristiques de réfraction que celles déterminées par la mesure réalisée en visée projetée décrite précédemment, notamment le centre optique, la puissance sphérique, la puissance cylindrique, l'orientation de l'axe du cylindre de puissance, la puissance prismatique et l'orientation de l'arête du prisme de puissance.

## Revendications

1.  Procédé de détermination d'au moins une caractéristique de réfraction d'une lentille (20) ophtalmique, selon lequel:

    a) on dispose la lentille (20) sur un support (10) comportant au moins

    - deux éléments de soutien (12, 13, 14), chacun en contact avec une des faces principales de la lentille (20) en une zone de contact dé surface réduite par rapport à la surface des faces principales de cette lentille (20), les zones de contact des éléments de soutien (12, 13, 14) avec la lentille ophtalmique (20) étant entièrement séparées les unes des autres, et
    - une plaque d'embase (11) transparente à partir de laquelle s'élève les éléments de soutien (12, 13, 14), ces derniers comportant au moins une partie opaque,

    b) on éclaire la lentille (20) posée sur son support (10) à l'aide de moyens d'eclairement (40),
    c) on capture, à l'aide de moyens de capture d'image (30), dans un plan de capture d'image sensiblement perpendiculaire à un axe optique (AO) de la lentille (20), une image d'au moins un des éléments de soutien (12, 13, 14) du support (10) éclairé par les rayons (R1, R2) issus desdits moyens d'éclairement et ayant traversés la lentille (20),
    d) on identifie, sur cette image, l'image dudit élément de soutien (12, 13, 14) du support (10) et on détermine au moins une caractéristique représentative de la géométrie de l'image dudit élément de soutien,
    e) on déduit d'au moins cette caractéristique representative de la géométrie de l'image dudit élément de soutien (12, 13, 14), ladite caractéristique de réfraction recherchée.

2.  Procédé selon la revendication 1, selon lequel, jes moyens d'eclairement (40) étant disposés d'un côté dudit support (10):

    - à l'étape c), on capture une image de l'ombre projetée (12B, 13B, 14B) de l'élément de soutien (12, 13, 14) du support (10) éclairé par les rayons (R1, R2) issus desdits moyens d'éclairement et ayant traversés la lentille (20), à l'aide desdits moyens de capture d'image (30) disposés du côté dudit support (10) opposé aux moyens d'éclairement (40),

- à l'étape d), on identifie sur cette image l'ombre projetée (12B, 13B, 14B) dudit élément de soutien (12, 13, 14) sous l'éclairage des moyens d'éclairement (40) et on détermine au moins une caractéristique réprésentative de la position de cette ombre projetée,

- à l'étape e), on déduit d'au moins de cette caractéristique représentative de la position dé l'ombre projetée (12B, 13B, 14B) dudit élément de soutien (12, 13, 14), ladite caractéristique de réfraction recherchée.

3. Procédé selon la revendication 2, selon lequel ladite caractéristique réfraction recherchée est l'une des caractéristiques suivantes : le centre optique, la puissance sphérique (S), la puissance cylindrique et l'orientation (a) de l'axe du cylindre de puissance, la puissance prismatique (PX, PY) et l'orientation de l'arête du prisme de puissance.

4. Procédé selon l'une des revendications 2 et 3, selon lequel,

- à l'étape d), on réalise les sous-étapes suivantes :

d1) on effectue sur l'image (11) capturée à l'étape c) une recherche d'un contour estimé (134), partiel ou total, de l'ombre projetée (12B, 13B, 14B) de l'élément de soutien (12, 13, 14) du support (10),

d2) on détermine une position d'un centre géométrique dudit contour estimé (134) de l'ombre projetée (12B, 13B, 14B) de l'élément de soutien (12, 13, 14) du support (10),

d3) on compare la position du centrde géométrique du contour estimé (134) déterminée à l'étape d2) à une position de référence d'un centre géométrique de l'ombre projetée (12A, 13A, 14A) de l'élément de soutien (12, 13, 14) en l'absence de lentille (20) et on en déduit le déplacement (T1, T2, T3) de l'ombre projetée (128, 13B, 14B) de l'élément de soutien (12, 13, 14) du support (10) entre cette position de référence et la position déterminée à l'étape d2),

- à l'étape e), on déduit de ce déplacement la caractéristique de réfraction recherchée.

5. Procédé selon la revendication 4, selon lequel, dans une étape préliminaire d'étalonnage précédant la mise en oeuvre de l'étape d3), ladite position de référence du centre géométrique de l'ombre projetée (12A, 13A, 14A) de l'élément de soutien (12, 13, 14) est determinée suivant les étapes suivantes :

- on éclaire ledit support (10) à l'aide desdits moyens d'éclairement, en l'absence de lentille (20) ophtalmique,

- on capture une image (12), dans ledit plan de capture d'image qui est sensiblement perpendiculaire à l'axe optique de la léntille (20) lorsque celle-ci est disposée sur ledit support (10), de l'ombre projetée du support (10) éclairé par les rayons issus desdits moyens d'éclairement (40) à l'aide desdits moyens de capture d'image (30),

- on identifie sur cette image (12) l'ombre projetée dudit élément de soutien (12, 13, 14) du support (10) sous l'éclairage des moyens d'éclairement (40) et on détermine la position de référence de son centre géométrique.

6. Procède selon l'une des revendications 4 et 5, selon lequel, à l'étape e), on réalise les sous-étapes suivantes:

e1) on détermine un contour corrigé (135) de l'ombre projetée de l'élément de soutien (12, 13, 14) du support (10), à partir du contour estimé (134) à l'étape d1), en éliminant de ce contour estimé (134) un ensemble de points (E) situes autour de la direction du déplacement déterminée à l'étape d3),

e2) on modélise le contour corrigé (135) de l'ombré projetée (12B, 13B, 14B) de l'élément de soutien (12, 13, 14) du support (10) par un contour modèle,

e3) on détermine la position du centre géométrique de ce contour modèle,

e4) on déduit de la position du centre géométrique du contour modèle déterminée à l'étape e3) et de ladite position de référence du centre géométrique de l'ombre projetée (12A, 13A, 14A) de l'élément de soutien (12, 13, 14) en l'absence de lentille (20), la caractéristique de réfraction recherchée.

7. Procédé selon la revendication 6, selon lequel ledit ensemble de points (E) éliminés du contour estimé à l'étape e1) intercepte un secteur angulaire d'angle compris entre 0 et 180 degrés.

8. Procédé selon l'une des revendications 4 à 7, selon lequel :

à l'étape c), on capture une image numérique en niveaux de gris sur laquelle chaque pixel présente une valeur d'intensité déterminée,

à l'étape d1), on réalise une étape de binarisation selon laquelle

- on attribue une première valeur d'intensité aux pixels de ladite image présentant initialement une valeur d'intensité inférieure à une valeur seuil d'intensité,
- on attribue une deuxième valeur d'intensité aux pixels présentant initialement une valeur d'intensité supérieure a cette valeur seuil d'intensité, puis
- on recherche les pixels au niveau desquels ladite valeur d'intensité passe de ladite première valeur à ladite deuxième valeur.

9. Procédé selon la revendication 1, selon lequel, lesdits moyens d'éclairement (40) étant disposés d'un côté dudit support :

- à l'étape c), on capture une image du support éclairé par les rayons issus desdits moyens d'éclairement et ayant traversés ladite lentille à l'aide desdits moyens de capture d'image disposés du même côté dudit support que lesdits moyens d'éclairement,
- à l'étape d), on identifie sur cette image l'image de l'élément de soutien du support et on détermine au moins une caractéristique représentative de la géométrie de l'image de cet élément de soutien,
- à l'étape e), on déduit d'au moins cette caractéristique représentative de la géométrie de l'image dudit élément de soutien, ladite caractéristique de réfraction recherchée.

10. Procédé de centrage d'un gland de préhension d'une lentille (20) ophtalmique, selon lequel :

- on détermine la position du centre optique de ladite lentille (20) selon le procédé de l'une des revendications 1 à 8,
- on pose le gland de préhension sur la lentille (20) en une position qui coïncide avec ou dépend de ce centre optique.

11. Procédé de centrage, par rapport à un repère de référence, d'une lentille (20) ophtalmique comportant un repère de centrage destiné à être mis en correspondance avec ledit repère de référence, selon lequel :

i) on détermine, grâce au procédé selon l'une des revendications 1 à 8, la puissance sphérique (S) de la lentille (20),

j) on éclaire la lentille (20) posée sur son support (10) à l'aide desdits moyens d'éclairement disposés d'un côté dudit support (10), et on capture, dans ledit plan de capture d'image, une image (CR) de l'ombre projetée du repère de centrage de la lentille (20) sous l'éclairage dès moyens d'eclairement (40),

k) on affiche sur un écran de visualisation, d'une part l'ombre du repère de centrage (CR) de la lentille (20) et d'autre part, une cible virtuelle (CC) de centrage correspondant à la position voulue du repère de centrage par rapport audit repère de référence,

l) on déduit de la puissance sphérique de la lentille (20) déterminée à l'étape i), une position d'affichage corrigée de la cible virtuelle de centrage et/ou de l'image de l'ombre projetée du repère de centrage,

m) on déplace la lentille (20) ophtalmique de manière à faire coïncider les positions corrigées de l'ombre du repère de centrage de la lentille (20) et de la cible virtuelle (CC) de centrage.

12. Dispositif pour la mise en oeuvre du procédé selon l'une des revendications 1 à 8, comportant :

- un support (10) adapté à recevoir une lentille (20) ophtalmique, comportant au moins deux éléments de soutien (12, 13, 14), chacun en contact avec l'une des face principales de la lentille (20) en une zone de contact de surface réduite par rapport à la surface des faces principales de cette lentille (20), les zones de contact des éléments de soutient (12, 13, 14) avec la lentille ophtalmique (20) étant entièrement séparées les unes des autres, et une plaque d'embase (11) transparente à partir de laquelle s'élève les éléments de soutient (12, 13, 14), ces derniers comportant au moins une partie opaque,
- des moyens d'éclairement (40),
- des moyens de capture d'image (30),
- un dispositif de traitement d'image (50) adapté à identifier sur une image capturée par lesdits moyens de capture d'image, dans un plan sensiblement perpendiculaire à un axe optique de la lentille (20), l'ombre projetée (12B, 13B, 14B) dudit élément de soutien (12, 13, 14) du support (10), à déterminer au moins une caractéristique représentative de la position de l'ombre projetée et à déduire de cette caractéristique représentative de la position de l'ombre projetée dudit élément de soutien (12, 13, 14), ladite caractéristique de réfraction recherchée.

13. Dispositif selon la revendication 12, dans lequel ledit support (10) est amovible.

14. Dispositif selon l'une des revendications 12 et 13, dans lequel ledit élément de soutien (12, 13, 14) comporte une base (121, 131, 141) prolongée par un embout (122, 132, 142) de largeur inférieure à celle de ladite base.

**Patentansprüche**

1. Verfahren zur Bestimmung von mindestens einer Refraktionseigenschaft von einer ophthalmischen Linse (20), wobei:

   a) die Linse (20) auf einem Träger (10) angeordnet wird, der mindestens

   - zwei Stützelemente (12, 13, 14), die jeweils in Kontakt mit einer der Hauptflächen der Linse (20) in einem Kontaktbereich mit einer Oberfläche sind, die gegenüber der Oberfläche der Hauptflächen dieser Linse (20) reduziert ist, wobei die Kontaktbereiche der Stützelemente (12, 13, 14) mit der ophthalmischen Linse (20) vollständig voneinander getrennt sind, und
   - eine transparente Grundplatte (11) aufweist, von der aus sich die Stützelemente (12, 13, 14) erheben, wobei diese Letzteren mindestens einen opaken Teil aufweisen,

   b) eine Linse (20), die auf ihrem Träger (10) angeordnet wird, mit Hilfe von Beleuchtungsmitteln (40) beleuchtet wird,
   c) ein Bild von mindestens einem der Stützelemente (12, 13, 14) des Trägers (10), der durch die Strahlen (R1, R2) beleuchtet wird, die von den Beleuchtungsmitteln ausgehen und die Linse (20) durchquert haben, mit Hilfe von Bildaufnahmemitteln (30) in einer Bildaufnahmeebene, die im Wesentlichen senkrecht zu einer optischen Achse (AO) der Linse (20) ist, aufgenommen wird,
   d) auf diesem Bild das Bild des Stützelements (12, 13, 14) des Trägers (10) identifiziert wird und mindestens eine Eigenschaft bestimmt wird, die für die Geometrie des Bildes des Stützelements repräsentativ ist,
   e) von mindestens dieser Eigenschaft, die für die Geometrie des Bildes des Stützelements (12, 13, 14) repräsentativ ist, die gesuchte Brechungseigenschaft abgeleitet wird.

2. Verfahren nach Anspruch 1, wobei:

   wobei die Beleuchtungsmittel (40) auf einer Seite des Trägers (10) angeordnet werden:

   - in dem Schritt c) ein Bild des projizierten Schattens (12B, 13B, 14B) des Stützelements (12, 13, 14) des Trägers (10), der durch die Strahlen (R1, R2) beleuchtet wird, die von den Beleuchtungsmitteln ausgehen und die Linse (20) durchquert haben, mit Hilfe der Bildaufnahmemittel (30), die auf der Seite des Trägers (10) angeordnet werden, die den Beleuchtungsmitteln (40) gegenüberliegt, aufgenommen wird,
   - in dem Schritt d) auf diesem Bild der projizierte Schatten (12B, 13B, 14B) des Stützelements (12, 13, 14) unter der Beleuchtung der Beleuchtungsmittel (40) identifiziert wird und mindestens eine Eigenschaft bestimmt wird, die für die Position dieses projizierten Schattens repräsentativ ist,
   - in dem Schritt e) von mindestens dieser Eigenschaft, die für Position des projizierten Schattens (12B, 13B, 14B) des Stützelements (12, 13, 14) repräsentativ ist, die gesuchte Brechungseigenschaft abgeleitet wird.

3. Verfahren nach Anspruch 2, wobei die gesuchte Brechungseigenschaft eine der folgenden Eigenschaften ist: die optische Mitte, die sphärische Kraft (S), die Zylinderkraft und die Ausrichtung (a) der Achse des Kraftzylinders, die prismatische Kraft (PX, PY) und die Ausrichtung der Kante des Kraftprismas.

4. Verfahren nach einem der Ansprüche 2 und 3, wobei,

   - in dem Schritt d) die folgenden Unterschritte durchgeführt werden:

   d1) auf dem Bild (11), das in Schritt c) aufgenommen wird, wird ein Suchen einer vollständigen oder teilweisen, geschätzten Kontur (134) des projizierten Schattens (12B, 13B, 14B) des Stützelements (12, 13, 14) des Trägers (10) durchgeführt,

d2) eine geometrische Mitte der geschätzten Kontur (134) des projizierten Schattens (12B, 13B, 14B) des Stützelements (12, 13, 14) des Trägers (10) wird bestimmt,

d3) die Position der geometrischen Mitte der geschätzten Kontur (134), die in dem Schritt d2) bestimmt wird, wird mit einer Referenzposition einer geometrischen Mitte des projizierten Schattens (12A, 13A, 14A) des Stützelements (12, 13, 14) ohne Linse (20) verglichen und davon wird die Verschiebung (T1, T2, T3) des projizierten Schattens (12B, 13B, 14B) des Stützelements (12, 13, 14) des Trägers (10) zwischen dieser Referenzposition und der Position, die in Schritt d2) bestimmt wird, abgeleitet,

- in dem Schritt e) von dieser Verschiebung die gesuchte Brechungseigenschaft abgeleitet wird.

5. Verfahren nach Anspruch 4, wobei in einem vorbereitenden Schritt des Kalibrierens vor dem Umsetzen des Schrittes d3) die Referenzposition der geometrischen Mitte des projizierten Schattens (12A, 13A, 14A) des Stützelements (12, 13, 14) nach den folgenden Schritte bestimmt wird:

- der Träger (10) wird mit Hilfe von den Beleuchtungsmitteln ohne ophthalmische Linse (20) beleuchtet,
- ein Bild (12) wird von dem projizierten Schatten des Trägers (10), der von den Strahlen beleuchtet wird, die von den Beleuchtungsmitteln (40) ausgehen, mit Hilfe der Bildaufnahmemittel (30) in der Bildaufnahmeebene, die im Wesentlichen senkrecht zu der optischen Achse der Linse (20) ist, wenn diese auf dem Träger (10) angeordnet wird, aufgenommen,
- auf diesem Bild (12) wird der projizierte Schatten des Stützelements (12, 13, 14) des Trägers (10) unter der Beleuchtung der Beleuchtungsmittel (40) identifiziert und die Referenzposition von seiner geometrischen Mitte wird bestimmt.

6. Verfahren nach einem der Ansprüche 4 und 5, wobei in dem Schritt e) die folgenden Unterschritte durchgeführt werden:

e1) eine korrigierte Kontur (135) des projizierten Schattens des Stützelements (12, 13, 14) des Trägers (10) wird ausgehend von der Kontur (134), die in Schritt d1) geschätzt wird, bestimmt, indem von dieser geschätzten Kontur (134) ein Satz von Punkten (E) entfernt wird, die um die Richtung der Verschiebung angeordnet sind, die in dem Schritt d3) bestimmt wird,

e2) die korrigierte Kontur (135) des projizierten Schattens (12B, 13B, 14B) des Stützelements (12, 13, 14) des Trägers (10) wird durch eine Modellkontur modelliert,

e3) die Position der geometrischen Mitte dieser Modellkontur wird bestimmt,

e4) von der Position der geometrischen Mitte der Modellkontur, die in dem Schritt e3) bestimmt wird, und der Referenzposition der geometrischen Mitte des projizierten Schattens (12A, 13A, 14A) des Stützelements (12, 13, 14) ohne Linse (20) wird die gesuchte Brechungseigenschaft abgeleitet.

7. Verfahren nach Anspruch 6, wobei der Satz von Punkten (E), die in dem Schritt e1) von der geschätzten Kontur entfernt werden, einen Winkelsektor von einem Winkel zwischen 0 und 180 Grad schneidet.

8. Verfahren nach einem der Ansprüche 4 bis 7, wobei:

in dem Schritt c) ein digitales Bild in Graustufen aufgenommen wird, in dem jedes Pixel einen bestimmten Intensitätswert aufweist,
in dem Schritt d1) ein Schritt des Binarisierens durchgeführt wird, wobei

- den Pixeln des Bildes, die anfänglich einen Intensitätswert aufweisen, der niedriger als ein Intensitätsschwellenwert ist, ein erster Intensitätswert zugeordnet wird,
- den Pixeln, die anfänglich einen Intensitätswert aufweisen, der höher als dieser Intensitätsschwellenwert ist, ein zweiter Intensitätswert zugeordnet wird und dann
- die Pixel gesucht werden, an denen der erste Intensitätswert von dem ersten Wert zu dem zweiten Wert übergeht.

9. Verfahren nach Anspruch 1, wobei, wobei die Beleuchtungsmittel (40) auf einer Seite des Trägers angeordnet werden:

- in dem Schritt c) ein Bild des Trägers, der durch die Strahlen beleuchtet wird, die von den Beleuchtungsmitteln ausgehen und die Linse durchquert haben, mit Hilfe der Bildaufnahmemittel, die auf der gleichen Seite des Trägers wie die Beleuchtungsmittel angeordnet werden, aufgenommen wird,
- in dem Schritt d) auf diesem Bild das Bild des Stützelements des Trägers identifiziert wird und mindestens eine Eigenschaft bestimmt wird, die für die Geometrie des Bildes dieses Stützelements repräsentativ ist,
- in dem Schritt e) von mindestens dieser Eigenschaft, die für die Geometrie des Bildes des Stützelements repräsentativ ist, die gesuchte Brechungseigenschaft abgeleitet wird.

10. Verfahren zum Zentrieren eines Greifklotzes einer ophthalmischen Linse (20), wobei:

- die Position der optischen Mitte der Linse (20) nach dem Verfahren von einem der Ansprüche 1 bis 8 bestimmt wird,
- der Greifklotz auf die Linse (20) in einer Position angeordnet wird, die mit dieser optischen Mitte zusammenfällt oder davon abhängig ist.

11. Verfahren zum Zentrieren in Bezug auf eine Referenzmarkierung einer ophthalmischen Linse (20), die eine Zentrierungsmarkierung aufweist, die dazu bestimmt ist, mit der Referenzmarkierung in Übereinstimmung gebracht zu werden, wobei:

i) dank des Verfahrens nach einem der Ansprüche 1 bis 8 die sphärische Kraft (S) der Linse (20) bestimmt wird,
j) die Linse (20), die auf ihrem Träger (10) angeordnet wird, mit Hilfe von den Beleuchtungsmitteln beleuchtet wird, die auf einer Seite des Trägers (10) angeordnet werden, und in der Bildaufnahmeebene ein Bild (CR) des projizierten Schattens der Zentrierungsmarkierung der Linse (20) unter der Beleuchtung der Beleuchtungsmittel (40) aufgenommen wird,
k) auf einem Visualisierungsbildschirm einerseits der Schatten der Zentrierungsmarkierung (CR) der Linse (20) und andererseits ein virtuelles Zentrierungsziel (CC) angezeigt wird, das der gewollten Position der Zentrierungsmarkierung in Bezug auf die Referenzmarkierung entspricht,
l) von der sphärischen Kraft der Linse (20), die in dem Schritt i) bestimmt wird, eine korrigierte Anzeigeposition des virtuellen Zentrierungsziels und/oder des Bildes des projizierten Schattens der Zentrierungsmarkierung abgeleitet wird,
m) die ophthalmische Linse (20) derart verschoben wird, um die korrigierten Positionen des Schattens der Zentrierungsmarkierung der Linse (20) und des virtuellen Zentrierungsziels (CC) zusammenfallen zu lassen.

12. Vorrichtung zum Umsetzen des Verfahrens nach einem der Ansprüche 1 bis 8, umfassend:

- einen Träger (10), der geeignet ist, um eine ophthalmische Linse (20) aufzunehmen, der mindestens zwei Stützelemente (12, 13, 14), die jeweils in Kontakt mit einer der Hauptflächen (20) der Linse in einem Kontaktbereich sind, der gegenüber der Oberfläche der Hauptflächen dieser Linse (20) reduziert ist, wobei die Kontaktbereiche der Stützelemente (12, 13, 14) mit der ophthalmischen Linse (20) vollständig voneinander getrennt sind, und eine transparente Grundplatte (11) aufweist, von der aus sich die Stützelemente (12, 13, 14) erheben, wobei diese Letzteren mindestens einen opaken Teil aufweisen,
- Beleuchtungsmittel (40),
- Bildaufnahmemittel (30),
- eine Bildverarbeitungsvorrichtung (50), die geeignet ist, auf dem Bild, das von den Bildaufnahmemitteln aufgenommen wird, in einer Bildaufnahmeebene, die im Wesentlichen senkrecht zu der optischen Achse der Linse (20) ist, den projizierten Schatten (12B, 13B, 14B) des Stützelements (12, 13, 14) des Trägers (10) zu identifizieren, mindestens eine Eigenschaft, die für die Position dieses projizierten Schattens repräsentativ ist, zu bestimmen und von dieser Eigenschaft, die für Position des projizierten Schattens des Stützelements (12, 13, 14) repräsentativ ist, die gesuchte Brechungseigenschaft abzuleiten.

13. Vorrichtung nach Anspruch 12, wobei der Träger (10) abnehmbar ist.

14. Vorrichtung nach einem der Ansprüche 12 und 13, wobei das Stützelement (12, 13, 14) eine Basis (121, 131, 141) aufweist, die durch ein Anschlussstück (122, 132, 142) von einer Breite, die niedriger als jene der Basis ist, verlängert ist.

**Claims**

1. Method of determining at least one refractive characteristic of an ophthalmic lens (20), the method comprising the steps of:

   a) placing the lens (20) on a support (10) having at least two prop elements (12, 13, 14) each in contact with one of the main faces of the lens (20) in a contact zone of area that is small relative to the area of the main faces of said lens (20), the contact zones of the prop elements (12, 13, 14) with the ophthalmic lens (20) being entirely separated from each other, and a transparent stand plate (11) from which the prop elements (12, 13, 14) stands, the latter having at least one portion that is opaque;

   b) lighting the lens (20) placed on its support (10) with the help of lighting means (40);

   c) capturing, using image capture means (30), in an image capture plane that is substantially perpendicular to an optical axis (AO) of the lens (20), an image of at least one of the prop elements (12, 13, 14) of the support (10) lighted by the light rays (R1, R2) that come from said lighting means and that have passed through the lens (20);

   d) in said image, identifying the image of said prop element (12, 13, 14) of the support (10) and determining at least one characteristic representative of the geometry of the image of said prop element; and

   e) from said characteristic representative of the geometry of the image of said prop element (12, 13, 14), deducing said looked-for refractive characteristic.

2. Method according to claim 1, wherein the lighting means (40) are arranged on one side of said support (10) and:

   in step c), an image is captured of the shadow (12B, 13B, 14B) projected by the prop element (12, 13, 14) of the support (10) as lighted by the light rays (R1, R2) that come from said lighting means and that have passed through the lens (20), the image being captured with the help of said image capture means (30) that are arranged on the side of said support (10) that is opposite from the lighting means (40);

   in step d), the shadow (12B, 13B, 14B) projected by said prop element (12, 13, 14) under lighting by the lighting means (40) is identified in said image and at least one characteristic representative of the position of the projected shadow is determined; and

   in step e), said looked-for refractive characteristic is deduced at least from said characteristic representative of the position of the shadow (12B, 13B, 14B) projected by said prop element (12, 13, 14).

3. Method according to claim 2, wherein said looked-for refractive characteristic is one of the following characteristics: the optical center; the spherical power (S); the cylindrical power and the orientation (a) of the axis of the power cylinder; and the prismatic power (PX, PY) and the orientation of the edge of the power prism.

4. Method according to claim 2 or claim 3, wherein,
   in step d), the following substeps are performed:

   d1) searching the image (I1) captured in step c) for a partial or total estimated outline (134) of the shadow (12B, 13B, 14B) projected by the prop element (12, 13, 14) of the support (10);

   d2) determining a position of a geometrical center of said estimated outline (134) of the shadow (12B, 13B, 14B) projected by the prop element (12, 13, 14) of the support (10); and

   d3) comparing the position of the geometrical center of the estimated outline (134) as determined in step d2) with a reference position for a geometrical center of the shadow (12A, 13A, 14A) projected by the prop element (12, 13, 14) in the absence of a lens (20), and deducing therefrom the shift (T1, T2, T3) of the shadow (12B, 13B, 14B) projected by the prop element (12, 13, 14) of the support (10) between said reference position and the position determined in step d2);

   in step e), the looked-for refractive characteristic is deduced from this shift.

5. A method according to claim 4, wherein, in a preliminary calibration step preceding the performance of step d3), said reference position of the geometrical center of the shadow (12A, 13A, 14A) projected by the prop element (12, 13, 14) is determined by performing the following steps:

   - lighting said support (10) with the help of said lighting means and in the absence of an ophthalmic lens (20);

   - capturing, in said image capture plane, which is substantially perpendicular to the optical axis of the lens (20) when the lens is placed on said support (10), an image (I2) of the shadow projected by the support (10) lighted by the light rays from said lighting means (40) with the help of said image capture means (30), the image being captured; and

- identifying in said image (12) the shadow projected by said prop element (12, 13, 14) of the support (10) under lighting by the lighting means (40), and determining the reference position of its geometrical center.

**6.** Method according to claim 4 or claim 5, wherein, in step e), the following substeps are performed:

e1) determining a corrected outline (135) of the shadow projected by the prop element (12, 13, 14) of the support (10) from the outline (134) estimated in step d1) by eliminating from the estimated outline (134) a set of points (E) situated around the shift direction as determined in step d3);

e2) modeling the corrected outline (135) of the shadow (12B, 13B, 14B) projected by the prop element (12, 13, 14) of the support (10) with a model outline;

e3) determining the position of the geometrical center of the model outline; and

e4) deducing the looked-for refractive characteristic from the position of the geometrical center of the model outline determined in step e3) and from the reference position of the geometrical center of the shadow (12A, 13A, 14A) projected by the prop element (12, 13, 14) in the absence of a lens (20).

**7.** Method according to claim 6, wherein said set of points (E) eliminated from the outline estimated in step e1) intercepts an angular sector of angle lying in the range 0 to 180 degrees.

**8.** Method according to any one of claims 4 to 7, wherein:

in step c), a gray level digital image is captured in which each pixel presents a determined brightness value; and
in step d1), a binarization step is performed as follows:

- allocating a first brightness value to the pixels of said image that initially presented a brightness value less than a brightness threshold value;
- allocating a second brightness value to the pixels that initially presented a brightness value greater than said threshold brightness value;
and then
- searching for the pixels where said brightness value changes from said first value to said second value.

**9.** Method according to claim 1, wherein said lighting means (40) are located on one side of said support:

in step c), an image is captured of the support as lighted by light rays from said lighting means that have passed through said lens, the image being captured with the help of said image capture means that are located on the same side of said support as said lighting means;
in step d), identifying the image of the prop element of the support in said image and determining at least one characteristic representative of the geometry of the image of said prop element; and
in step e), deducing said looked-for refractive characteristic at least from said characteristic representative of the geometry of the image of said prop element.

**10.** Method of centering a gripper block on an ophthalmic lens (20), the method comprising the following steps:

- determining the position of the optical center of said lens (20) by the method of any one of claims 1 to 8; and
- placing the gripper block on the lens (20) in a position that coincides with or that depends on said optical center.

**11.** Method of centering an ophthalmic lens (20) relative to a reference mark, the lens including a centering mark for being put into correspondence with said reference mark, the method comprising the following steps:

i) using the method according to any one of claims 1 to 8 to determine the spherical power (S) of the lens (20) ;
j) lighting the lens (20) placed on its support (10) with the help of said lighting means located on one side of said support (10), and, in said image capture plane, capturing an image (CR) of the shadow projected by the centering mark of the lens (20) when lighted by the lighting means (40);
k) displaying on a display screen firstly the shadow of the reference mark (CR) of the lens (20), and secondly a virtual centering target (CC) corresponding to the desired position for the centering mark relative to said reference mark;
l) from the spherical power of the lens (20) as determined in step i), deducing a corrected display position for the virtual centering target and/or for the image of the shadow projected by the centering mark; and

m) moving the ophthalmic lens (20) in such a manner as to cause the corrected position of the shadow of the centering mark of the lens (20) to coincide with the position of the virtual centering target (CC).

**12.** Device for performing the method according to any one of claims 1 to 8, the device comprising:

- a support (10) adapted to receive an ophthalmic lens (20), the support having at least two prop elements (12, 13, 14), each in contact with one of the main faces of the lens (20) in a contact zone of area that is small relative to the area of the main faces of said lens (20), the contact zones of the prop elements (12, 13, 14) with the ophthalmic lens (20) being entirely separated from each other, and a transparent stand plate (11) from which the prop elements (12, 13, 14) stands, the latter having at least one portion that is opaque;

- lighting means (40);

- image capture means (30); and

- an image processor device (50) adapted to respond to an image captured by said image capture means in a plane substantially perpendicular to an optical axis of the lens (20) to identify the shadow (12B, 13B, 14B) projected by said prop element (12, 13, 14) of the support (10), to determine at least one characteristic representative of the position of the projected shadow, and, from said characteristic representative of the position of the shadow projected by said prop element (12, 13, 14), to deduce said looked-for refractive characteristic.

**13.** Device according to claim 12, wherein said support (10) is removable.

**14.** Device according to claim 12 or claim 13, wherein said prop element (12, 13, 14) comprises a base (121, 131, 141) extended by a tip (122, 132, 142) of width that is smaller than the width of said base.

Fig.2

Fig.1

Fig.3

Fig.4

Fig.5A  Fig.5B  Fig.5C  Fig.5D

Fig.7

Fig.8

# Fig.6

**EP 2 646 789 B1**